# FASCICULE DE BREVET EUROPEEN

(11) **EP 2 089 400 B1**
(45) Date de publication et mention de la délivrance du brevet: **27.01.2016**
(21) Numéro de dépôt: 07870277.6
(22) Date de dépôt: 13.11.2007
(51) Int. Cl.: C07F 9/09

(54) **PROCEDE DE PREPARATION D'ACETYL, DOCOSAHEXAENOYL-GLYCÉROPHOSPHOCHOLINE, ET SON UTILISATION POUR L'APPORT D'ACIDES GRAS POLYINSATURES**
VERFAHREN ZUR HERSTELLUNG VON ACETYL-DOCOSAHEXAENOYL-GLYCEROPHOSPHOCHOLIN UND SEINE VERWENDUNG ZUR VERABREICHUNG MEHRFACH UNGESÄTTIGTER FETTSÄUREN
METHOD FOR PREPARING ACETYL,DOCOSAHEXAENOYL-GLYCEROPHOSPHOCHOLINE AND USE THEREOF FOR THE DELIVERY OF POLYUNSATURATED FATTY ACIDS

(30) Priorité: 14.11.2006 FR 0609929
(43) Date de publication de la demande: 19.08.2009
(73) Titulaire: Institut National des Sciences Appliquées de Lyon, 69621 Villeurbanne (FR)
(72) Inventeur: LAGARDE, Michel, 69150 Decines-Charpieu (FR); GUICHARDANT, Michel, 69370 Saint-Didier-au-Mont-d'Or (FR); PICQ, Madeleine, 42800 Chateauneuf (FR); MICHAUD, Sabine, 01600 Trevoux (FR); DOUTHEAU, Alain, 69006 Lyon (FR)
(74) Mandataire: Bouillet, Jean-Jacques
(86) Numéro de dépôt international: PCT/FR2007/001868
(87) Numéro de publication internationale: WO 2008/068413

(56) Documents cités:
- POLETTE A ET AL: "SYNTHESIS OF ACETYL, DOCOSAHEXAENOYL-GLYCEROPHOSPHOCHOLINE AND ITS CHARACTERIZATION USING NUCLEAR MAGNETIC RESONANCE" LIPIDS, CHAMPAIGN, IL, US, vol. 34, no. 12, décembre 1999 (1999-12), pages 1333-1337, XP008028838 ISSN: 0024-4201
- HARALDSSON G G ET AL: "Preparation of phospholipids highly enriched with n-3 polyunsaturated fatty acids by lipase" JOURNAL OF THE AMERICAN OIL CHEMISTS' SOCIETY, SPRINGER, BERLIN, DE, vol. 76, no. 10, 1 janvier 1999 (1999-01-01), pages 1143-1149, XP002384377 ISSN: 0003-021X
- SVENSSON I ET AL: "LIPASE-CATALYZED TRANSESTERIFICATION OF PHOSPHATIDYLCHOLINE AT CONTROLLED WATER ACTIVITY", JOURNAL OF THE AMERICAN OIL CHEMISTS' SOCIETY, SPRINGER, BERLIN, DE LNKD- DOI:10.1007/BF02541063, vol. 69, no. 10, 1 October 1992 (1992-10-01), pages 986-991, XP001135187, ISSN: 0003-021X
- SARNEY D B ET AL: "LIPASE-CATALYZED SYNTHESIS OF LYSOPHOSPHOLIPIDS IN A CONTINUOUS BIOREACTOR", JOURNAL OF THE AMERICAN OIL CHEMISTS' SOCIETY, SPRINGER, BERLIN, DE LNKD- DOI:10.1007/BF02541478, vol. 71, no. 1, 1 January 1994 (1994-01-01), pages 93-96, XP008028748, ISSN: 0003-021X

## Description

La présente invention concerne la préparation d'Acétyl,docosahexaénoyl-glycérophosphocholine (AcedoPC) et son utilisation pour l'apport de DHA et de Neuroprotectine D1 (NPD1).

Les acides gras essentiels polyinsaturés de la famille n-3 sont maintenant reconnus pour avoir des propriétés bénéfiques pour la santé et de ce fait leur notoriété s'est accrue ces dernières années. Parmi ces acides gras, le DHA ou acide 4,7,10,13,16,19-cis docosahexaénoïque est un constituant majeur de la rétine et du cerveau. Extrait de produits marins, il est utilisé dans la prévention et le traitement des maladies cardiovasculaires et inflammatoires. L'apport en DHA est recommandé pour les besoins de développement/régénération cérébral. Il est donc d'un grand avantage pour la nutrition infantile et pour combattre les maladies neuro-dégénératives comme la maladie d'Alzheimer où le stress oxydant associé est supposé altérer le DHA cérébral.

Le document de HARALDSSON G et AL intitulé « Preparation of phospholipids highly enriched with n-3 polyunsaturated fatty acids by lipase », Journal of the American oil chemists' society, springer, Berlin, DE, vol. 76, n010, 1 janvier 1999, pages 1143-1149, décrit l'utilisation de la lipase de Rhizomucor miehei 1,3-régiospécifique pour catalyser une réaction de transestérification (acidolyse) de 1,2-diacyl-sn-glycero-3- phosphatidylcholine avec des acides gras polyinsaturés. La lipase utilisée est immobilisée et contient de 2,5 à 20% d'eau et la réaction a lieu en présence d'acide eicosapentanoique à 60-65°C.

Le document de SVENSSON I et AL intitulé « lipase-catalyzed transesterification of phosphatidylcholine at controlled water activity », Journal of the American oil chemists' society, Springer, Berlin, DE, vol. 69, n°10, 1 octobre 1992, pages 986-991, est relatif à l'incorporation d'acide gras libre en position sn-1 d'une phosphatidylcholine par transestérification catalysée par une lipase. Il décrit une réaction de transestérification d'une solution de PC d'oeuf en présence d'acide heptanoique et de lipase Rhizopus arrhizus immobilisée. La phosphatidylcholine est hydrolysé en lysophosphatidylcholine par une lipase (Rhizopus arrhizus) afin de déplacer l'acide gras en position sn-1 ou avec une phospholipase A2 pour la position sn-2.

Le document de SARNEY D B et AL intitulé « lipâse-catalyzed synthesis of lysophospholipids in a continuous bioreactor », Journal of the American oil chemists' sociéty, Springer, Berlin, DE, vol. 71, n°1, 1 janvier 1997, pages 93-96, concerne une méthode enzymatique de synthèse de lysolécithine catalysée par une lipase immobilisée. Il divulgue la synthèse de lysophosphatidylcholine-2-palmitoyl à partir de phosphatidylcholine dipalmitoyle par réaction enzymatique avec la lipase de Mucor miehei immobilisée. Ledit lysophosphatidylcholine-2-palmitoyl obtenu est ensuite exposé à des vapeurs d'ammoniac pour catalyser la migration de l'acide gras de la position sn-2 à la position sn-1.

Le document de POLETTE A et AL intitulé « synthesis of acetyl, docosahexaenoylglycerophosphocholine and its characterization using nuclear magnetic resonnance », Lipids, Champaign, IL, US, vol. 34, n°12, décembre 1999, pages 1333-1337, vise à fournir des molécules véhiculant du DHA qui sont de type lysoPC-DHA. Elles sont préparées à partir de 1-stearoyl, 2-DHA-GPC par hydrolyse enzymatique mettant en oeuvre une lipase de Rhizopus arrhizus qui bénéficie d'une activité phospholipase A1. Cependant, étant donné l'instabilité de ces molécules lysoPC-DHA vis-à-vis de l'isomérisation, ces dernières sont estérifiées en position sn-1 par acétylation chimique à l'aide de l'anhydride acétique. Ainsi stabilisées, elles pourront ensuite délivrer le DHA aux tissus cibles à conditions que ces derniers disposent d'enzyme acétyle hydrolase.

Il a été rapporté dans le brevet FR 9214078 que l'apport de DHA au cerveau peut être fortement augmenté par l'utilisation d'un ester phospholipidique de DRA.

Des résultats très récents de la littérature montrent par ailleurs qu'un dérivé lipoxygénasique du DHA, appelé neuroprotectine D1 (NPD1), est comme son nom l'indique capable de protéger le cerveau de diverses altérations inflammatoires (Bazan N G, Marcheselli VL,Cole-Edwards K. 2005.Ann N Y Acad Sci 1053 ; 137-147).

En conséquence, il existe un besoin pour un vecteur de transport du DHA et de ses dérivés ciblant le cerveau de manière efficace. La présente invention a précisément pour but de répondre à ce besoin en offrant un procédé de préparation d'une forme moléculaire permettant de produire facilement, à faible coût et en grande quantité un précurseur du DHA et de la NPD1.

Les travaux réalisés par les Inventeurs avec une barrière hémato-encéphalique reconstituée ont clairement montré que l'apport de DHA au cerveau est fortement accru si cet acide gras circulait dans le sang sous forme de 1-lyso,2-DHA-glycérophosphocholine comparativement au DHA sous forme non estérifiée, la forme habituelle d'apport d'acides gras aux tissus. Cependant ce phospholipide n'est pas stable et un équilibre s'établit facilement avec l'isomère estérifié en position 1 (1-DHA,2-lyso-GPC) (Croset M, Brossard N, Polette A and Lagarde M. 2000. Biochem J 345, 61-67. Ce dernier est largement majoritaire (80%) lorsque l'équilibre est atteint. L'acétylation de la position 1 rendrait la migration du DHA impossible et permettrait d'obtenir un véhicule de DHA plus polaire que les phospholipides naturels biodisponible per os et stable jusqu'au clivage du résidu acétyle par les estérases du tissu cible.

Une demande accrue de phospholipides possédant une structure moléculaire définie a stimulé le développement de différentes méthodes de synthèse à la fois chimiques et enzymatiques (Paltauf and Hermetter,1994). D'une façon classique, le procédé de synthèse d'un phospholipide mixte c'est-à-dire possédant deux acides gras différents bien définis, consiste à hydrolyser sélectivement une des deux fonctions esters du lipide (par exemple une phosphatidylcholine (PC) comme molécule initiale) par une phospholipase A2 (PLA2) possédant l'acide gras désiré en sn-1. Le 1-acyl,2-lysoGPC obtenu est ensuite réestérifié par méthode chimique afin d'incorporer l'acide gras désiré en position sn-2. Il n'existe pas de phospholipides naturels comportant un groupement acétyle en position sn-1, ce procédé n'a donc pas été envisagé.

Les méthodes enzymatiques sont attractives pour la modification des phospholipides à cause de leur régiosélectivité. Les lipases ou la phospholipase A₁ peuvent être utilisées pour enlever régiosélectivement et/ou incorporer un acide gras en position sn-1.

Ainsi, la présente invention a pour objet un procédé de préparation de 1-acétyl,2-DHA-GPC par synthèse enzymatique, consistant à soumettre (i) un substrat constitué par ou comprenant une PC contenant le DHA en position sn-2 à l'action (ii) d'une lipase spécifique de la position sn-1 pour échanger l'acide gras en position sn-1, soit en une seule étape par une réaction de transestérification réalisée dans un réacteur en circuit fermé mis sous azote, ladite lipase étant choisie parmi les triacylglycérolhydrolases de *Candida antartica, Candida rugosa, Pseudomonas* et la lipase de *Mucor miehei* et dans lequel le substrat est séché par lyophilisation et le réactif d'acétylation est choisi dans le groupe comprenant l'acétate d'éthyle, l'acétate de vinyle, l'acétate d'isopropényle, l'acétate de phényle, l'acétate de 2,2,2-trichloroéthyle ou leur mélange et dans lequel le solvant de réaction est ledit réactif lui-même ou un solvant à l'exclusion de l'hexane.

Les travaux de recherche réalisés dans le cadre de la présente invention ont permis la synthèse de PC avec un groupement acétyle en position sn-1 et un DHA en position sn-2 du squelette glycérol à la fois par synthèse chimique et par synthèse enzymatique. Une synthèse de ce produit a déjà été réalisée par coupure enzymatique de 1-palmitoyl,2-DHA-GPC avec la lipase de

*Rhizopus arrhizus* suivie d'une acétylation par l'anhydride acétique (Polette A, Deshayes C, Chantegrel B, Armstrong J.M and Lagarde M. 1999. Lipids 34, 1333-1337.).

Selon une forme préférée de réalisation de l'invention, le procédé comprend la mise en oeuvre d'une lipase immobilisée sur un support.

A titre de support, l'invention envisage tout particulièrement une résine échangeuse d'ions, mais d'autres supports tels que Sol-Gel peuvent être employés. Parmi les lipases susceptibles d'être utilisées avec de tels supports, on peut citer plus particulièrement la lipase de *Mucor miehei.* On peut utiliser d'autres lipases spécifiques des liaisons esters en position 1 et 3 des triglycérides, comme les triacylglycérolhydrolases de *Candida antartica, Candida rugosa, Pseudomonas,* etc. Toutefois, il en existe peu de commercialisée sous la forme immobilisée.

La lipase de *Rhizopus arrhizus* a aussi été testée dans l'invention pour la première réaction de libération de l'acide gras en position sn-1 de la PC. Elle a aussi été immobilisée sur gel de polypropylène mais les premiers résultats de transestérification n'ont pas été aussi concluants qu'avec la lipase de *Mucor miehei.* De plus cette lipase chère à l'achat n'est actuellement plus commercialisée par Sigma.

Comme indiqué ci-dessus, la synthèse enzymatique réalisée en deux étapes se heurte à plusieurs problèmes. La coupure du groupement palmitoyle en position sn-1 n'est pas totale et les risques d'oxydation du DHA et surtout d'isomérisation du 1-lyso,2-DHA-GPC en 1-DHA,2-lyso-GPC sont augmentés.

La transestérification en une étape conduit à l'obtention de l'AcédoPC avec 60% de rendement. En conséquence, la présente invention concerne plus particulièrement un procédé de préparation de 1-acétyl,2-DHA-GPC (AcédoPC) en soumettant une PC contenant le DHA en position sn-2 à une réaction de transestérification sous l'action d'une lipase spécifique de la position sn-1.

Plusieurs réactifs d'acétylation ont été testés. L'acide acétique et l'anhydride acétique ou leur mélange inhibent l'enzyme. En combinant l'acétate d'éthyle et l'acétate de vinyle on obtient un meilleur rendement. D'autres réactifs d'acétylation peuvent être utilisés tels que l'acétate d'isopropényle, l'acétate de phényle, l'acétate de 2,2,2-trichloroéthyle, etc.

Plusieurs solvants ont été testés pour les réactions d'estérification ou de transestérification. Il est apparu que la réaction ne fonctionnait pas quand l'hexane était le solvant de réaction. Au contraire, lorsqu'on utilise comme solvant le toluène ou le réactif lui-même : l'acétate d'éthyle on obtient des rendements similaires.

Ainsi, dans le procédé de l'invention, on préfère utiliser l'acétate d'éthyle seul fraîchement distillé et déhydraté. Avantageusement, on ajoute à ce solvant de l'acétate de vinyle pour favoriser la réaction de transestérification.

On préfère alors respecter les rapports suivants entre le substrat (la PC) et l'enzyme 1:10 et de préférence 1:5, le solvant étant en excès.

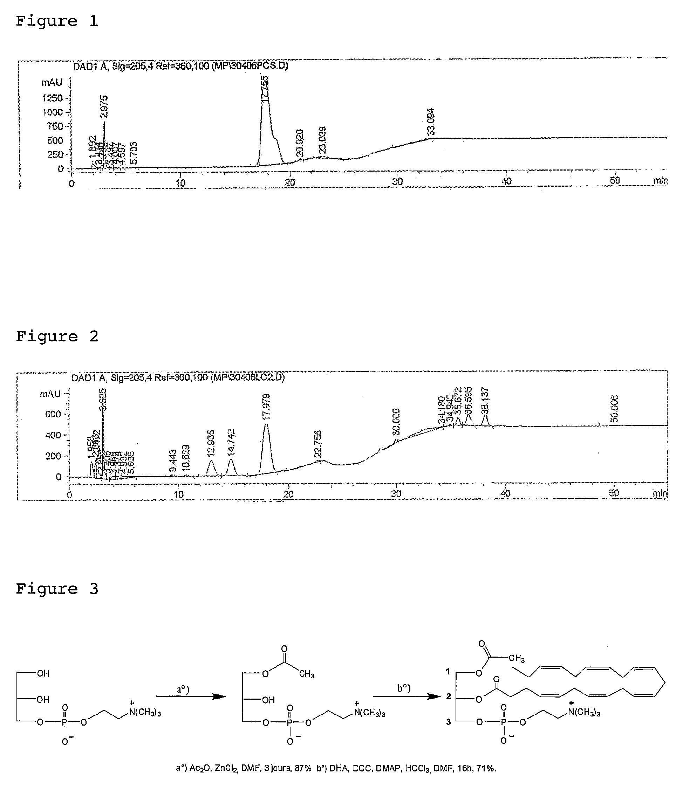

Comme montré sur les figures 1 et 2, il a été vérifié par HPLC que le produit formé majoritairement par voie enzymatique a le même temps de rétention (17,9 min) que l'AceDoPC synthétisé chimiquement. La CCM montre également un Rf identique à celui de l'AceDoPC synthétisé chimiquement (0,25) et différent de celui des lyso-GPC (0,19). l'AceDoPC élué à 17,9 minutes est collecté. Après transestérification les acides gras sont méthylés et quantifiés en chromatographie en phase gazeuse (GC). Les résultats montrent exclusivement la présence de DHA et l'absence d'acide palmitique. Ce produit purifié par chromatographie sur colonne de silice a été analysé par RMN du proton et du ¹³C. Les résultats permettent de dire qu'on a majoritairement (environ 85%) la 1-acétyl,2-DHA-GPC grâce aux déplacements chimiques des deux fonctions carbonyles respectivement 172,6 et 170,9 ppm. Par ailleurs, après l'action de la PLA₂ l'analyse par GC des esters méthyliques d'acides gras révèle la présence exclusive de DHA ce qui prouve sa localisation en position sn-2 du squelette glycérol.

Il convient cependant d'être attentif car trois difficultés peuvent se présenter lors de la mise en oeuvre du procédé de l'invention.

La première difficulté provient du fait que le DHA est estérifié en position sn-2 de la PC, ce qui peut modifier la réactivité de la position sn-1. Par exemple Adlercreutz et al. (Adlercreutz D, Budde H and Wehtje E, 2002. Biotechnol Bioeng 78,403-411) montrent que la coupure enzymatique en sn-1 de 1,2-dipalmitoyl-GPC catalysée par la lipozyme conduit à 97% de formation de 1-lyso,2-palmitoyl-GPC pure après 7h de réaction. Lorsque le substrat est constitué de 1-palmitoyl,2-arachidonyl-GPC ou 1-palmitoyl,2-oleoyl-GPC, les Inventeurs ont également constaté une disparition totale de la PC de départ associée à la formation de 1-lyso,2-acyl-GPC au bout de 24h de réaction. Cependant avec la 1-palmitoyl,2-DHA-GPC la réaction enzymatique s'arrête après quelques heures, ce qui se passe également avec la réaction de transestérification qui n'est pas totale. Sans doute la conformation particulière du DHA joue-telle un rôle. Des études conformationnelles réalisées par Applegate et Glomset (Applegate K.R and Glomset J.A 1986.J. Lipid.Res, 27,658-680) ainsi que par Steghens et al. (Arab K, Rossary A, Soulère L and Steghens J.P. 2006 Br. J. Nutr, 96,811-9) sur les acides gras libres insaturés montrent une conformation préférentielle globulaire pour l'acide 5,8,11,14,17-eicosapentaénoïque et pour le DHA tandis que l'acide arachidonique aurait une conformation intermédiaire entre la conformation à « épingle à cheveu » (trouvée pour l'acide linolénique) et la conformation globulaire du DHA. Les résultats de plusieurs études de la littérature réalisées avec différentes PC ont conduit les auteurs à déduire qu'une chaîne polyinsaturée ayant des doubles liaisons séparées par un simple groupe méthylène (comme le DHA) avait un maximum de flexibilité. Evert et Davis (Evert S and Davis H 2000. Biophys. J., 79, 885-897.) ont également suggéré que le DHA présent en grande quantité dans les membranes faciliterait les changements de conformation des protéines membranaires. Une étude RMN du proton et du ¹³C réalisée sur des bicouches constituées de 1-palmitolyl,2-DHA-GPC dans un tampon phosphate montre une forte association entre le DHA et la choline, association qui n'est pas retrouvée pour l'acide palmitique.

La seconde difficulté réside dans la nature de l'acide à incorporer. En effet l'acide acétique de même que l'anhydride acétique ne peuvent pas être utilisés avec l'enzyme immobilisée car ils l'inhibent totalement. L'acétylation enzymatique en position sn-1 de phospholipides n'a pas été rapportée dans la littérature ; seuls des alcools ont été utilisés comme substrats, notamment le glycérol. On peut constater en parcourant la littérature que les rendements d'acétylation varient selon le substrat, selon l'acide à incorporer, selon la température, selon le solvant utilisé. On peut en conclure que chaque synthèse a sa spécificité.

Une troisième difficulté réside dans le fait qu'il faut remarquer que la lipozyme est inactivée sans doute par un ou des produits formés au cours de la réaction qui sont : lysoPC, acide palmitique et peut-être aussi palmitate d'éthyle.

Une façon d'améliorer le rendement est d'utiliser le substrat séché par lyophilisation. La réaction est avantageusement réalisée dans un réacteur en circuit fermé sous azote pour éviter l'oxydation du DHA. L'efficacité pourrait encore être augmentée par utilisation de réacteurs successifs.

Ainsi l'homme du métier est à même d'optimiser les conditions expérimentales pour obtenir un rendement maximal.

Le procédé de l'invention est remarquable en ce qu'il offre de nombreux avantages. Le rendement est de 60%. Les sources de PC riche en DHA sont nombreuses et disponibles en grande quantité à partir d'extraits de produits marins. Ainsi, dans le procédé de l'invention le substrat de départ peut être une biomasse d'origine marine contenant des phospholipides riches en DHA. A titre d'exemples, on peut citer des phospholipides issus de têtes de poisson.

Le procédé est également applicable à des PC dont la position sn-2 est estérifiée par d'autres acides gras insaturés notamment l'acide arachidonique.

En outre, l'enzyme immobilisée est facile d'emploi et son coût est minime puisqu'elle est réutilisable plusieurs fois après lavage. La récupération du produit est simple. Elle consiste en une simple filtration de l'enzyme immobilisée suivie d'une purification par HPLC. Cette méthode utilisant de gros volumes de solvants organiques peut être avantageusement remplacée par la chromatographie en phase fluide supercritique. Cette méthode n'a pas d'impact sur l'environnement et conduit à des produits finaux de haute qualité sans trace de solvants toxiques.

La synthèse chimique d'AceDoPC est aussi décrite. Ce procédé de synthèse peut être utilisé pour la préparation de 1-acétyl,2-NPD1-GPC à partir de la 1-acétyl -GPC. Un autre procédé consiste à soumettre la 1-acétyl,2-DHA-GPC à l'action d'une lipoxygénase comme la 15-lipoxygénase de soja.

La synthèse chimique consiste à utiliser la glycérophosphocholine (GPC) comme produit de départ.

Une première stratégie consiste à acyler sélectivement par le DHA l'hydroxyle en position sn-2 du squelette glycérol après avoir bloqué sélectivement la position sn-1 et ensuite à débloquer puis acétyler l'hydroxyle primaire en position sn-1.

Une deuxième stratégie consiste à acétyler de façon régiosélective l'hydroxyle en position sn-1 et à acyler ensuite par le DHA l'hydroxyle en position sn-2. Ce deuxième schéma de synthèse permet d'obtenir plus rapidement la 1-acétyl,2-DHA-GPC avec de meilleurs rendements (schéma représenté fig.3).

La synthèse chimique ici décrite commence par l'acétylation en position sn-1 de la glycérophosphocholine, qui sert de groupement protecteur pour l'acylation de la position sn-2 par le DHA ; ainsi la protection utilisée dans la première étape correspond à la synthèse définitive puisque l'acétyle est conservé.

Cette synthèse est remarquable car elle est réalisée en deux étapes seulement, mais elle ne permet pas d'utiliser la biomasse riche en DHA comme dans le procédé enzymatique.

D'autres avantages et caractéristiques de l'invention apparaîtront des exemples qui suivent concernant l'obtention du 1-acétyl,2-DHA-GPC. Il sera fait référence aux dessins en annexe dans lesquels :
- la figure 1 représente le profil chromatogramme HPLC en phase inverse de l'AceDoPC obtenu par synthèse chimique élué à un temps de rétention de 17,75 min.
- La figure 2 représente le profil chromatogramme HPLC en phase inverse d'une aliquote de la synthèse enzymatique. Le produit majoritaire (AceDoPC) est élué à 17,98 min.
- La figure 3 représente le schéma de la synthèse chimique de 1-acétyl, 2-DHA-GPC.

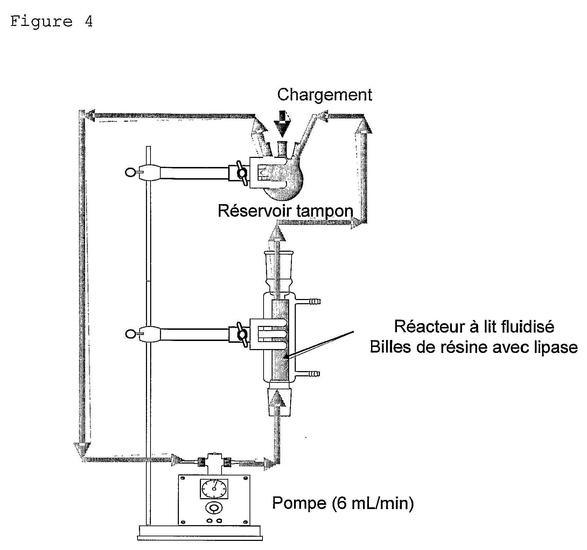

- La figure 4 représente le schéma du réacteur utilisé pour la synthèse enzymatique.

### I - Synthèse enzymatique de 1-acétyl,2-DHA-GPC

### I.1) Transestérification (Biosynthèse en réacteur Fig .4)

La lipoenzyme immobilisée de *Mucor miehei* (5g,210 unités) est introduite dans le réacteur. A l'aide de la pompe le réacteur est rempli d'acétate d'éthyle anhydre (75 ml) que l'on fait circuler à la vitesse de 6 ml/min. On introduit alors la 1-palmitoyl,2-DHA-GPC (1 g, 1.2 mmol, 1 équiv.) substrat, dissout dans 5 ml d'acétate d'éthyle dans le réservoir tampon ainsi que 500 *µ*l d'acétate de vinyle (5.3 mmol, 4.5 équiv.). L'air est chassé par un courant d'azote, le réservoir fermé hermétiquement et la pompe est mise en route.

Le solvant circulant de bas en haut à travers la résine permet par ce brassage un meilleur contact.

L'avancement de la réaction est suivi par HPLC analytique et par CCM. Après 72h le substrat de départ a complètement disparu. L'enzyme filtre est lavée plusieurs fois avec CHCl₃/C₂H₅OH : 2: /1. Le mélange réactionnel est évaporé sous vide.

Après séchage, le résidu final est chromatographié sur gel de silice avec un mélange chloroforme/méthanol/eau 65/25/4)en présence d'un antioxydant(tocophérol : 1/1000 mol/mol).

Afin de suivre la réaction par HPLC analytique, 15 à 20 *µ*l de milieu réactionnel sont prélevés régulièrement. L'échantillon est mis en solution dans 100 *µ*l de tampon A (méthanol/eau/acétonitrile 90/35/2.5 + chlorure de choline) puis injecté.

Ils sont filtrés pour éliminer les particules du support. Le solvant est évaporé, remplacé par 100 *µ*l de solvant éluant et le prélèvement est injecté.

La réaction est aussi suivie par CCM sur gel de silice 60 (Merck) avec comme solvant d'élution le mélange CHCl₃/CH₃OH/H₂O : 65:/25:/4 : (v/v/v). Afin de visualiser Les phospholipides et les acides gras la plaque est vaporisée sont révélés par le mélange phosphomolybdique. La composition en acides gras de la PC est vérifiée par chromatographie gazeuse (GC). La pureté du produit est analysée identifié par RMN du proton, du ¹³C et du ³¹P.

### I.2) HPLC

Les analyses par HPLC ont été réalisées avec un système Agilent Series 1100 équipé d'un injecteur automatique et d'un détecteur à barrettes de diodes UV/visible. La séparation des différents phospholipides produits a été faite sur une colonne Waters XTerra C₁₈ (5*µ*m, 4,6x250 mm) avec une pré-colonne de même origine en utilisant un gradient d'élution à un débit de 1,4 ml/min et à une température de 60°C. Les solvants A et B correspondent à un mélange méthanol/eau/acétonitrile dans les proportions respectives (90 :35 :2,5 v/v/v) et (100 :4 :2,5 v/v/v) contenant chacun 0,35% de chlorure de choline. L'élution commence avec 100% de A pendant 15 minutes puis on atteint 100% de B en 30 minutes. Les phospholipides sont détectés à 205 nm.

### I.3) Analyse par GC

Les échantillons correspondant respectivement à chaque pic d'HPLC sont prélevés et transméthylés selon la méthode décrite par Morrison et Smith en présence de 500 *µ*l du mélange toluène/méthanol (2/3, v/v), 500 *µ*l de trifluorure de bore (Aldrich 14% dans le méthanol) et de 1,2-diheptadécanoyl-glycérophosphocholine comme standard interne. Après 90 minutes à 100°C les acides gras en position sn-1 et sn-2 sont convertis en esters méthyliques. La réaction est stoppée dans la glace à 4°C. On ajoute alors 1,5 ml d'une solution de carbonate de potassium à 10% dans l'eau. Les esters méthyliques sont extraits par 2x2 ml d'isooctane. Les tubes sont agités et centrifugés afin de récupérer la phase organique qui est ensuite évaporée. Le résidu est repris dans un volume connu d'isooctane pour l'analyse.

### II - Synthèse chimique de 1-acétyl,2-DHA-GPC (cette synthèse n'est pas comprise par l'étendue des revendications)

### II.1) Matériel et méthodes

La synthèse chimique de la 1-acétyl,2-DHA-GPC a été réalisée en deux étapes à partir de la glycérophosphocholine (GPC) commercialisée par Bachem AG. La première étape consiste en une mono-acétylation régiosélective de la fonction alcool primaire du glycérol suivie par l'acylation de la fonction alcool secondaire par le DHA suivant le schéma ci-dessous (Fig.1). La 1-acétyl,2-DHA-GPC ainsi que le régioisomère avaient déjà été obtenus et caractérisés au laboratoire à partir respectivement de la 1-lyso,2-DHA-GPC et de la 1-DHA,2-lyso-GPC préparés par hydrolyse enzymatique de la 1-stéaroyl,2-DHA-GPC par la PLA₁/TG lipase de *Rhizopus arrhizus* (Polette et al. Lipids 1999, 34, 12, 1333-1337).

Toutes les réactions ont été suivies par CCM sur plaques de silice Merck 60F₂₅₄ révélées par pulvérisation d'une solution d'acide phosphomolybdique à 5% dans EtOH/10% H₂SO₄. La purification du composé acétyl-DHA-GPC a été réalisée sur gel de silice (60G, granulométrie : 0,04-0,06 mm, Merck).

Les analyses structurales RMN du 1-acétyl, 2-lyso-GPC ont été enregistrées dans D₂O (résonance à 4,80 ppm) sur un spectromètre Bruker AC 200 (200,13/81,01 MHz) respectivement pour le proton et le phosphore 31 et celles du 1-acétyl,2-DHA-GPC ont été enregistrées dans CDCl₃ (résonances à 7,26 ppm et 77,1 ppm) sur un spectromètre DRX 500 (500/125 MHz) respectivement pour le proton et le carbone 13 et sur un spectromètre Bruker AC 200 (81,01 MHz) pour le phosphore 31. Les abréviations suivantes s, d, dd, t, m signifient respectivement singulet, doublet, doublet de doublet, triplet, multiplet. Les constantes de couplages sont données en Hertz.

### II.2) Synthèse de 1-acétyl,2-lyso-GPC

On met en suspension dans un ballon de 25ml, sous flux d'azote, 306,5 mg (1,19 mmol, 1 équivalent) de GPC dans 2,5 ml de DMF. 194 mg de ZnCl₂ (1,43 mmol, 1,2 équivalent) sont ensuite ajoutés. Le mélange réactionnel devenu limpide est maintenu sous agitation pendant 3 heures.

Après refroidissement à 0°C, on ajoute 146 *µ*l d'anhydride acétique (158 mg, 1,55 mmol, 1,3 équivalent) sous azote. Au bout de 3 jours environ la réaction est stoppée par addition de 30 ml d'éther. Les produits de la réaction précipitent. Ils sont filtrés, séchés sous vide à 35°C puis séparés par chromatographie sur silice flash (HCCl₃/CH₃OH/H₂O 40:60:20). On obtient le produit de mono-acétylation sous la forme d'une huile visqueuse incolore (156 mg, 44%) de R_{f} = 0,22, la GPC de départ (152 mg, 50%), et un peu de produit de diacétylation (7,4 mg, 2%) de R_{f} = 0,28.

La présence de deux pics respectivement à 0,380 et 0,220 ppm en RMN du ³¹P et la présence d'un signal à 5,1 ppm en RMN du proton (correspondant au déplacement du proton central du glycérol quand la position sn-2 est acylée) permet de dire que nous avons la coexistence des deux régioisomères 1-acétyl,2-lyso-GPC / 1-lyso,2-acétyl-GPC dans un rapport 80/20 d'après l'intégration des signaux.
¹H RMN δ = 4,34-3,93 (7H, m, CH₂-O et CH-O) ; 3,71 (2H, m, CH₂-N) ; 3,24 (9H, s,
(CH₃)₃ -N) ; 2,14 (3H, s, CH₃-CO).
³¹P RMN δ = 0,380.

### II.3) Synthèse de 1-acétyl,2-DHA-GPC

Le 1-acétyl,2-lyso-GPC (74,2 mg, 0,248 mmol, 1 équivalent), le DHA (200 mg, 0,609 mmol, 2,5 équivalents), le DCC (100 mg, 0,488 mmol, 2 équivalents) et la DMAP (60 mg, 0,492 mmol, 2 équivalents) sont préalablement séchés sous vide dans un dessicateur sur P₂O₅ pendant 3 heures. Le chloroforme est distillé sur P₂O₅.

Le substrat est mis en suspension dans 2,5 ml de chloroforme, sous azote et agitation. 150 *µ*l de DMF anhydre sont ajoutés afin de le solubiliser. Au bout de 10 minutes le DHA est introduit à l'aide d'une seringue, suivi de l'addition du DCC puis de la DMAP. Il est alors agité sous azote pendant 16 heures à température ambiante à l'abri de la lumière. La dicyclohexylurée formée est filtrée et le filtrat est concentré sous vide.

Après chromatographie sur gel de silice avec le mélange CHCl₃/CH₃OH/H₂O 40:50:10 comme solvant d'élution, on obtient 108 mg de produit. (0,177 mmol, 71%) (R_{f} = 0,35) et 140 mg de DHA (R_{f} = 0,91) qui n'a pas réagi.

La RMN permet de dire qu'il y a coexistence dans un rapport 20/80 de l'isomère 1-DHA,2-acétyl-GPC facilement identifiable par rapport au 1-acétyl,2-DHA-GPC grâce aux déplacements chimiques du ¹³C des deux fonctions carbonyles (respectivement 173,2 et 170,8 ppm pour le premier et 172,9 et 171,2 pour le second). En RMN du ³¹P, un seul pic est visible.

¹H NMR δ = 5,44-5,34 (12H, m, CH=CH) ; 5,26-5,23 (1H, m, ²CH) ; 4,41 (1H, dd, *J* = 12,0 et 3,2 Hz, ¹CH₂) ; 4.40-4.30 (2H, m, O-CH₂-CH₂-N) ; 4.17 (1H, dd, *J* = 12,0 et 7,0 Hz, ¹CH₂) ; 4,04-3,96 (2H, m, ³CH₂) ; 3,84-3,79 (2H, m, O-CH₂-CH₂-N) ; 3,38 (9H, s, N(CH₃)₃) ; 2,89-2,81 (10H, m, =CH-CH₂-CH=) 2,43-2,38 (4H, m, O-CO-CH₂-CH₂-) ; 2,12-2,03 (2H, m, =CH-CH₂-CH₃) ; 2,06 (3H, s, CH₃-CO) ; 1,00 (3H, t, *J* = 7,5 Hz, , =CH-CH₂-CH₃).

¹³C NMR δ = 172,88 (CH-O-CO-CH₂-CH₂) ; 171,18 (CH₂-O-CO-CH₃) ; (132,41-127,39 (CH=CH) ; 71,25 (²CH) ; 66,70 ( O-CH₂-CH₂-N) ; 63,58 (³CH₂) ; 63,39 (¹CH₂) ; 59,70 (O-CH₂-CH₂-N) ; 54,72 [N(CH₃)₃] ; 34,32 (O-CO-CH₂-CH₂-) ; 26,3-25,6 (=CH-CH₂-CH=) ; 22,96 (O-CO-CH₂-CH₂-) ; 21,22 (CH₃-CO) ; 20,97 (=CH-CH₂-CH₃) ; 14,43 (=CH-CH₂-CH₃).

³¹P NMR δ = - 0,430.

## Revendications

1. Procédé de préparation de 1-acétyl,2-docosahexaénoyl-glycérophosphocholine par synthèse enzymatique en soumettant (i)un substrat constitué par ou comprenant une phosphatidylcholine contenant l'acide docosahexaénoïque en position sn-2 à l'action (ii) d'une lipase spécifique de la position sn-1,
pour échanger l'acide gras en position sn-1, en une seule étape, par une réaction de transestérification réalisée dans un réacteur en circuit fermé mis sous azote,
ladite lipase étant choisie parmi les triacylglycérolhydrolases de *Candida antartica, Candida rugosa, Pseudomonas* et la lipase de *Mucor miehei,*
dans lequel le substrat est séché par lyophilisation et le réactif d'acétylation est choisi dans le groupe comprenant l'acétate d'éthyle, l'acétate de vinyle, l'acétate d'isopropényle, l'acétate de phényle, l'acétate de 2,2,2-trichloroéthyle ou leur mélange et dans lequel le solvant de réaction est ledit réactif lui-même ou un solvant à l'exclusion de l'hexane.

2. Procédé selon la revendication 1, comprenant la mise en oeuvre de ladite lipase immobilisée sur un support.

3. Procédé selon la revendication 2, dans lequel le support est une résine échangeuse d'ions.

4. Procédé selon l'une quelconque des revendications précédentes, dans lequel un solvant est mis en oeuvre et choisi parmi le toluène, l'acétate d'éthyle et un mélange de ceux-ci.,

5. Procédé selon la revendication 4 dans lequel ledit solvant est l'acétate d'éthyle.

6. Procédé selon l'une quelconque des revendications précédentes, dans lequel le réactif d'acétylation est une combinaison d'acétate de vinyle et d'acétate d'éthyle.

7. Procédé selon l'une quelconque des revendications précédentes, dans lequel le rapport entre le substrat et l'enzyme est de 1:10, de préférence de 1:5.

8. Procédé selon l'une quelconque des revendications précédentes, dans lequel le substrat de départ est une biomasse d'origine marine contenant des phospholipides.

9. Procédé selon la revendication 8, dans lequel la biomasse d'origine marine est riche en acide docosahexaénoïque.

10. Procédé selon l'une quelconque des revendications 2 à 9, dans lequel l'enzyme immobilisée est réutilisable plusieurs fois après lavage.

11. Procédé selon l'une quelconque des revendications 2 à 10 dans lequel la récupération du produit dudit procédé consiste en une filtration de l'enzyme immobilisée suivie d'une purification par HPLC

12. Procédé de préparation de 1-acétyl,2-Neuroprotectine D1-glycérophosphocholine à partir de la 1-acétyl,2-docosahexaénoyl-glycérophosphocholine, dans lequel on soumet la 1-acétyl,2-acide docosahexaénoïque-glycérophosphocholine préparée selon un procédé selon l'une quelconque des revendications 1 à 11 à l'action d'une lipoxygénase comme la 15-lipoxygénase de soja.

## Patentansprüche

1. Verfahren zur Herstellung von 1-Acetyl,2-docosahexaenoylglycerophosphocholin durch enzymatische Synthese dadurch, dass man (i) ein Substrat, das aus einem Phosphatidylcholin, das Docosahexaensäure in Position sn-2 enthält, besteht oder dieses umfasst, der Einwirkung (ii) einer für die Position sn-1 spezifischen Lipase unterwirft,
um die Fettsäure in Position sn-1 in einem einzigen Schritt durch eine Umesterung, die in einem Reaktor mit geschlossenem Kreislauf unter Stickstoff durchgeführt wird, auszutauschen,
wobei die Lipase aus den Triacylglycerolhydrolasen von *Candida antartica, Candida rugosa, Pseudomonas* und der Lipase von *Mucor miehei* ausgewählt ist,
wobei das Substrat durch Lyophilisierung getrocknet wird und das Acetylierungsreagenz aus der Gruppe umfassend Ethylacetat, Vinylacetat, Isopropenylacetat, Phenylacetat, 2,2,2-Trichlorethylacetat oder ihrer Mischung ausgewählt ist und wobei das Lösungsmittel der Reaktion das Reagenz selbst oder ein Lösungsmittel mit Ausnahme von Hexan ist.

2. Verfahren nach Anspruch 1, bei dem die Lipase, die auf einem Träger immobilisiert ist, eingesetzt wird.

3. Verfahren nach Anspruch 2, wobei es sich bei dem Träger um ein Ionenaustauscherharz handelt.

4. Verfahren nach einem der vorhergehenden Ansprüche, wobei ein Lösungsmittel, ausgewählt aus Toluol, Ethylacetat und einer Mischung davon, eingesetzt wird.

5. Verfahren nach Anspruch 4, wobei es sich bei dem Lösungsmittel um Ethylacetat handelt.

6. Verfahren nach einem der vorhergehenden Ansprüche, wobei es sich bei dem Acetylierungsreagenz um eine Kombination von Vinylacetat mit Ethylacetat handelt.

7. Verfahren nach einem der vorhergehenden Ansprüche, wobei das Verhältnis zwischen Substrat und Enzym 10:1, vorzugsweise 1:5, beträgt.

8. Verfahren nach einem der vorhergehenden Ansprüche, wobei es sich bei dem Ausgangssubstrat um eine phospholipidhaltige Biomasse marinen Ursprungs handelt.

9. Verfahren nach Anspruch 8, wobei die Biomasse marinen Ursprungs reich an Docosahexaensäure ist.

10. Verfahren nach einem der Ansprüche 2 bis 9, wobei das immobilisierte Enzym nach dem Waschen mehrmals wiederverwendbar ist.

11. Verfahren nach einem der Ansprüche 2 bis 10, wobei die Gewinnung des Produkts des Verfahrens aus dem Abfiltrieren des immobilisierten Enzyms, gefolgt von einer HPLC-Reinigung, besteht.

12. Verfahren zur Herstellung von 1-Acetyl,2-neuroprotectin-D1-glycerophosphocholin ausgehend von 1-Acetyl,2-Docosahexaenoylglycerophosphocholin, wobei man das nach einem Verfahren nach einem der Ansprüche 1 bis 11 hergestellte 1-Acetyl,2-docosahexaensäureglycerophosphocholin der Einwirkung einer Lipoxygenase wie der 15-Lipoxygenase aus Soja unterzieht.

## Claims

1. Process for preparing 1-acetyl-2-docosahexaenoyl-glycerophosphocholine by enzymatic synthesis by subjecting (i) a substrate consisting of or comprising a phosphatidylcholine containing docosahexaenoic acid in position sn-2 to the action (ii) of a lipase specific for position sn-1,
in order to exchange the fatty acid in position sn-1, in a single step, by means of a transesterification reaction carried out in a closed-circuit reactor placed under nitrogen,
said lipase being chosen from the triacylglycerol-hydrolases of *Candida antartica, Candida rugosa* and *Pseudomonas* and the lipase of *Mucor miehei,*
in which the substrate is dried by lyophilization and the acetylating reagent is chosen from the group comprising ethyl acetate, vinyl acetate, isopropenyl acetate, phenyl acetate and 2,2,2-trichloroethyl acetate, or a mixture thereof, and in which the reaction solvent is said reagent itself or a solvent with the exclusion of hexane.

2. Process according to Claim 1, comprising the use of said lipase immobilized on a support.

3. Process according to Claim 2, in which the support is an ion exchange resin.

4. Process according to any one of the preceding claims, in which a solvent is used and chosen from toluene, ethyl acetate and a mixture thereof.

5. Process according to Claim 4, in which said solvent is ethyl acetate.

6. Process according to any one of the preceding claims, in which the acetylating reagent is a combination of vinyl acetate and ethyl acetate.

7. Process according to any one of the preceding claims, in which the ratio between the substrate and the enzyme is 1:10, preferably 1:5.

8. Process according to any one of the preceding claims, in which the starting substrate is a biomass of marine origin containing phospholipids.

9. Process according to Claim 8, in which the biomass of marine origin is rich in docosahexaenoic acid.

10. Process according to any one of Claims 2 to 9, in which the immobilized enzyme can be reused several times after washing.

11. Process according to any one of Claims 2 to 10, in which the recovery of the product of said process consists of filtration of the immobilized enzyme followed by purification by HPLC.

12. Process for preparing 1-acetyl-2-neuroprotectin D1-glycerophosphocholine from 1-acetyl-2-docosa-hexaenoyl-glycerophosphocholine, in which the 1-acetyl-2-docosahexaenoic acid-glycerophosphocholine prepared according to a process according to any one of Claims 1 to 11 is subjected to the action of a lipoxygenase such as soybean 15-lipoxygenase.
